# EUROPEAN PATENT APPLICATION

(11) **EP 1 180 887 A1**
(43) Date of publication of application: **20.02.2002**
(21) Application number: 00117852.4
(22) Date of filing: 18.08.2000
(51) Int. Cl.: H04L 29/06, G06F 17/30

(54) **A method for communicating in a communication network, in particular in a wireless communication network**

(71) Applicant: NOKIA MOBILE PHONES LTD., 02150 Espoo (FI)
(72) Inventor: Tervo, Juha, 44879 Bochum (DE); Decker, Peter, 45772 Marl (DE)
(74) Representative: TER MEER STEINMEISTER & PARTNER GbR

(57) **Abstract**

The invention relates to a method for communicating in a communication network, in particular in a wireless communication network, for delivering client-related information from a service provider to a client. To facilitate the communication between the client's terminal and the server of a service provider for getting client-related information, in particular for getting information related to the actual position of the client, the method comprises the steps of storing a piece of information specifying the client at the client's side upon request from the provider; updating parts of said piece of information stored at the client's side with information specifying the client, in particular specifying the actual position of the client obtained at the client's side; transmitting said piece of information from the client's side to the service provider's side upon request from the service provider; and transmitting client-related, in particular position-related information from the service provider to the client in accordance with the actual information specifying the client and/or his/her actual position retrieved from said piece of information.

## Description

The present invention relates to a method for communicating in a communication network, in particular in a wireless communication network delivering client-related information from a service provider to a client.

From internet applications a method for communicating in the internet is known wherein a visitor of a website is "marked" by the server of the website. This "marking" is performed by means of cookies which are stored at the visitor's side by the visitor's browser upon request of the websites server. In particular, a cookie is a piece of information specifying the visitor and being transmitted from the website's server to the visitor's browser together with a request directed to the visitor's browser to store this piece of information, i.e. the cookie, in the memory of the browser's side. When the user visits the same website again the server thereof asks the user's or visitor's browser if there is any cookie related with the actual website and if so to send the cookie to the websites' server for identifying the visitor.

Thus, cookies are a very useful tool in maintaining state variables on the internet. In particular, cookies can store data base information, custom page settings, or informatiion just about anything that would make a side individual and customizable.

A cookie is simply a HTTP (hyper text transport protocol) header that consists of a text-only string that gets entered into the memory of a browser. This string contains the domain, path, lifetime, and value of a variable that awebsite sets. If the lifetime ofthis variable is longer than the time the user spends at that website, then this string is saved in the memory of the browser's side for future reference.

Usually cookies consist of the following parameters: name (name of the cookie); value (value of the cookie); expiration date (how long the cookie is valid); path (path name from where the cookie can accessed); domain (domain name of the server that can access the cookie information); secure (secure connection).

Using the WAP (wireless application protocol) it is possible to communicate with any internet server by means of a mobile terminal via a WAP gateway. A WAP gateway is a linking means for connecting a wireless network to the internet. Since the software of a WAP terminal, e.g. a mobile phone, supports HTTP cookies they can be used to store information on the visitor's side even if an internet website is visited via a WAP gateway.

For some services provided via the internet it is necessary for the service provider to know some specific information about the visitor, i.e. the subscriber or client for delivering the correct client-related information to the client.

For example, if a client uses a traffic information system that informs him about the traffic situation in regular intervals the service provider has to know the actual position of the client to inform him about the actual traffic situation in the region where he stays. Consequently, the service provider has to be informed about the actual position of the client.

Thus, it is an object of the present invention to provide a method of the initially named kind which facilitates the communication between the client's terminal and the server of a service provider for getting client-related information.

This object is achieved by the method according to claim 1. Advantagoues refinements and developments of the method according to the invention are described in the subclaims.

According to the invention it is provided that a piece of information specifying the client is stored at the client's side; parts of the piece of information stored at the client's side are updated with information specifying the client obtained at the client's side; the piece of information is transmitted from the client's side to the service provider's side upon request from the service provider; and client-related information are transmitted from the service provider to the client in accordance with the actual information specifying the client retrieved from the piece of information.

Thus, according to the present invention it is possible to create a piece of information, i.e. a cookie or at least a part thereof in a client's terminal. Therefore, it is possible to store a lot of domain specific information and also application related data which can be delivered from the client's terminal to a server without changing WAP specifications. This domain or client specific information can include the position of the client's terminal and in case of a car integrated mobile terminal the information can also include car related diagnostic data.

Thus, according to the present invention it is possible to create and to actualize the whole piece of information, i.e. the cookie at the client's side or to create the cookie at the service provider's side whereas those parts of information which have to be updated regularly with actual information are created and thereafter updated at the client's side. In both cases the cookies are read by the service provider's server like an usual cookie.

According to a specific embodiment of the present invention information specifying the actual position of the client is included into the piece of information stored at the client's side, the information specifying the actual position is updated and than position related information is transmitted form the service provider to the client in accordance with the actual position of the client.

According to another embodiment of the invention the information for automatically updating the information specifying the actual position of the client will be obtained by determining the actual position of the client at the client's side.

To simplify the implementation of the inventive method the actual position of the client can be determined regularly. However, to ensure that the distance between the actual position of the client and the stored position does not exceed a predetermined value it is provided that the actual position of the client is determined every time when a predetermined interval expires. Thereafter, the distance between the actual position of the client and the stored position is determined and then the length of the next predetermined time interval is estimated in accordance with the distance between the actual and the stored positions and the length of the previous predetermined time interval.

In addition actualization of the stored information is also possible by updating the information specifying the actual position of the client upon request from a client input via an user interface with information obtained by determining the actual position of the client at the client's side. This feature may be provided in addition or instead of automatically updating to ensure that the position related information delivered by the provider is related with the most actual position when a request for information is mannually initiated by the client.

According to a further embodiment of the invention it is provided that the information specifying the actual position of the client is updated prior to requesting transmition of position related information from the service provider by the client with information obtained by determining the actual position of the client at the client's side.

According to an advantagoues refinement of the invention it is provided that the actual position of the client is determined by means of a dead reckoning or composite navigation module at the client's side. Further, it is possible to provide the feature to determine the actual position of the client by reading input information input by the client.

According to another advantages refinement of the present invention it is provided that the actual position of the client is determined by means of GPS (Global Positioning System) module at the client's side.

The invention is explained in more detail in the following text, by way of example, using the drawing, in which:

Figure 1: schematically shows a communication network and

Figures 2a to 2d: schematically show different diagrams for explaining the communication between a client's terminal and website server.

In the various figures of the drawing, mutually corresponding parts are provided with identical reference symbols.

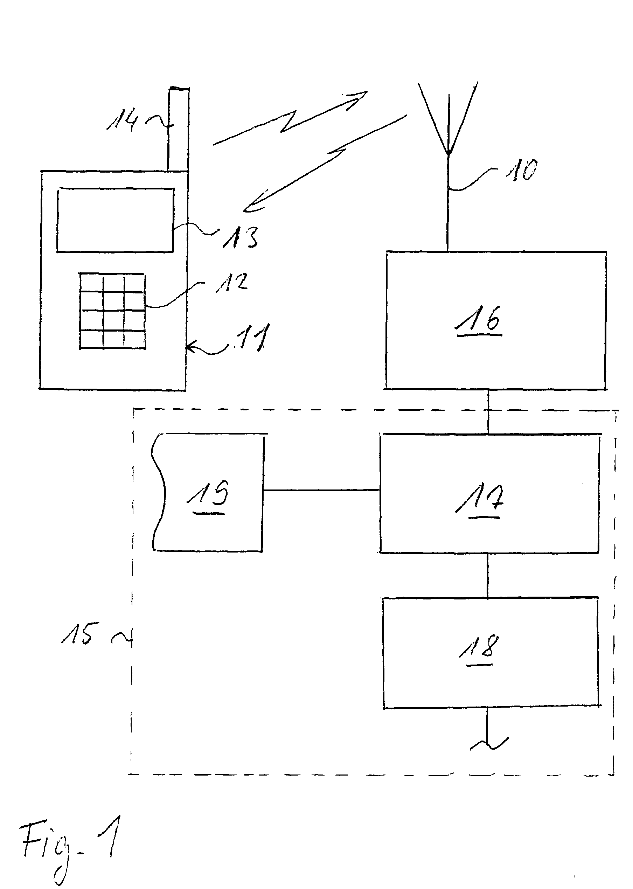

As schematically shown in figure 1 a communication network for delivering client-related information from a service provider to a client comprises a wireless network 10, at least one mobile terminal 11 having a user interface with a keypad 12 and a display 13 and transceiver module indicated by an antenna 14 for communicating via the wireless network 10.

As a linking means between the wireless network 10 and the world wide web or internet 15 a WAP (Wireless Application Protocol) gateway 16 is provided which is connected to the wireless network on the one side and to the internet 15 on the other side.

The internet, which uses world wide web (www) protocols is built up by a plurality of servers 17, 18, 19.

For explaining the invention by way of example it is presumed that the website of a service provider providing traffic information services is located on the server 17. The terminal 11 is used by a client or subscriber of the service provider, who frequently uses the traffic information service.

The terminal 11 can be a mobile phone like a cellular phone or a car integrated mobile phone.

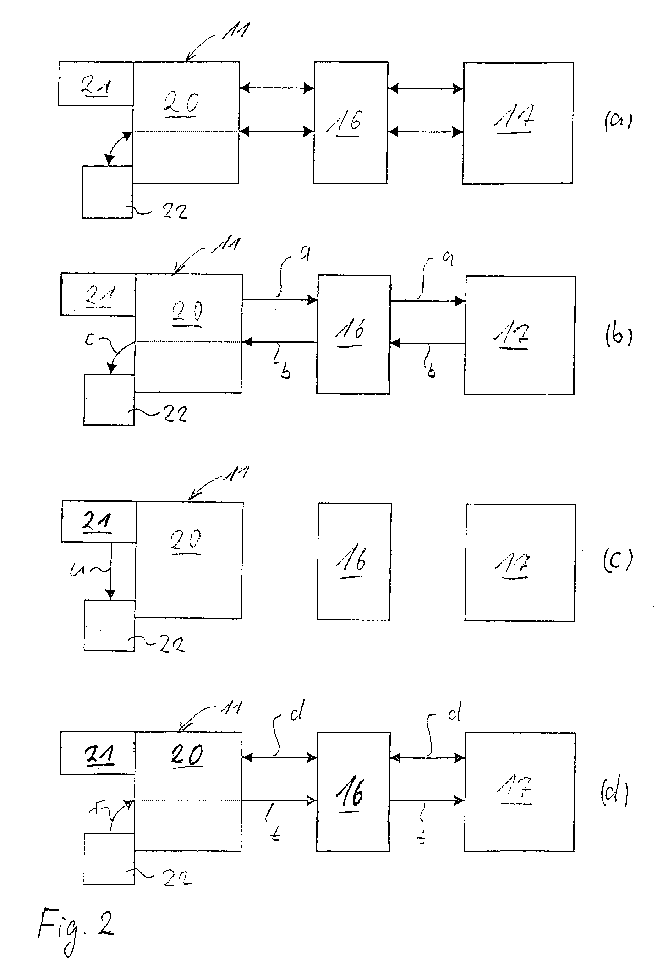

As schematically shown in figure 2 the terminal 11 comprises a browser 20, a position determining module 21 and a memory 22.

When a user wishes to visit any website or for example a traffic information service provider website on the server 17, he/she activates the browser 20 to communicate with the internet server 17 via the gateway 16 which adapts the specifications according to the WAP protocol to the specifications according to the www protocols. During such visit the server 17 of the website transmits user specific information obtained from the browser 20 back to the browser 20 together with access data and requests the browser to store this piece of information, i.e. the cookie in the memory 22. If the user visits the same website next time the server 17 of the website reads the cookie for retrieving the visitor specific information. This procedure is indicated by the arrows in Figure 2 (a).

When a client or subscriber of a service provider wishes to visit the service provider's website the first time client specific information will be transmitted from the browser 20 of the client's terminal 11 via the gateway 16 to the service provider's server 17 as indicated by the arrows a in Figure 2 (b). At the server 17 a piece of information is created in accordance with the information transmitted from the browser 20, i.e. a cookie including client specific information for simplifying the communication between the terminal 11 and the server 17 in the future. The cookie is transmitted from the server 17 to the browser 20 as indicated by the arrows b. Then, the browser stores the cookie in the memory 22 as indicated by the arrow c upon request of the server 17.

Alternatively, it is also possible to create a piece of information at the browser and to store this browser created piece of information like a cookie in the memory 22 as long as the formal requirements for creating a cookie are satisfied.

Next time when the client communicates with his/her service provider, i.e. when the terminal 11 communicates with the server 17 via the gateway 16 as indicated by the arrows d in Figure 2 (d) the server asks for a cookie for retrieving client specific information necessary for providing the client with the correct client-related information. Upon request of the server 17 the browser 20 reads the cookie as indicated by arrow r and transmits the content of the cookie to the server 17 as indicated by the arrows t. In this way it is possible for the server 17 to retrieve client specific information without changing the WAP specifications.

According to the present invention the client's specific information stored in the memory 22 can be updated at the terminal's side as indicated by the arrow u in figure 2 (c).

In particular, for getting position related information from a traffic information service provider it is necessary that the position information stored as a part of a cookie in the memory 22 is kept always up-to-date, i.e. as closely related to the actual position of the client as possible. Therefore, the actual position information provided by the position determining module 21 is stored instead of the older position information in the memory as a part of a cookie. This replacement of older position information by actual position information take place either in regular intervals or in intervals the length of which will be determined every time when updating the information.

In the latter case it is possible to determine the length of the next time interval for waiting until the next updating by comparing the distance between the actual position of the client and the elder position of the client stored in the memory with a threshold value and to increase or to decrease the length of the time interval to be predetermined relative to the length of the last time interval so as to optimize the processors activities at the terminal.

However, it seems to be also possible to get the actual position information from the position determining module 21 each time prior to requesting new traffic information from the service provider.

To obtain actual position information at the terminal side it is possible to use a dead reckoning or composite navigation module. Such a composite navigation module calculates the actual position starting with a known start position by determining the driving directions and the driving distances in each direction. The starting position can be input by the client or user.

However, to obtain most precise position information it is preferred to use a GPS (Global Positioning System) module. Such a GPS module provides position information with high resolution so that it is possible obtain the best position information whenever it is needed.

The present invention makes it possible to inform a client who is driving form point A to point B, e.g. from Munich to Bochum, about any relevant traffic situation on his/her way either reglarly or occasionally. To get the traffic situation information the client informes the service provider that he/she starts driving from point A to point B. The server of the service provider reads the cookie with the client specific information so as to identify the client and his/her actual location or position. After delivering the first position related traffic situation information the connection between the terminal and the server ends. Then, after a predetermined time has expired a new connection will be built up between the terminal and the server for delivering position related information to the client. In addition, it is possible that the server calls the client in case that highly relevant traffic situation information has to be delivered to the client. Otherwise it is also possible that the user manually initiate a request for actual traffic information.

Since the position information stored in the memory as a part of a cookie is kept up-to-date the provider is always able to select only the relevant position related traffic situation information for the client.

The inventive method can not be used only for traffic information systems but also for other information systems providing client-related and/or poble to use the inventive method with a remote control and maintenance system that regularly ask for operation data from a device, e.g. operation data from a motor vehicle which are analyzed at the provider's side for calculating maintenance or service intervals or for informing the driver of the vehicle of defect parts or the like.

## Claims

1. A method for communicating in a communication network, in particular in a wireless communication network, for delivering client-related information from a service provider to a client;
the method comprising the steps of:
- storing a piece of information specifying the client at the client's side;
- updating parts of said piece of information stored at the client's side with information specifying the client obtained at the client's side;
- transmitting said piece of information from the client's side to the service provider's side upon request from the service provider; and
- transmitting client-related information from the service provider to the client in accordance with the actual information specifying the client retrieved from said piece of information.

2. The method as claimed in claim 1, **characterized, by**
- including information specifying the actual position of the client into said piece of information stored at the client's side,
- updating said information specifying the actual position; and
- transmitting position-related information from the service provider to the client in accordance with the actual position of the client.

3. The method as claimed in claim 1 or 2, **characterized, by** updating said information specifying the actual position of the client automatically with information obtained by determining the actual position of the client at the client's side.

4. The method as claimed in claim 3, **characterized, by** determining the actual position of the client regularly.

5. The method as claimed in claim 3, **characterized, by**
- determining the actual position of the client every time when a predetermined time interval expires;
- determining the distance between the actual position of the client and the stored position; and
- estimating the length of the next predetermined time interval in accordance with the distance between the actual and the stored positions and the length of the previous predetermined time interval.

6. The method as claimed in any one of the claims 1 to 5, **characterized, by** updating said information specifying the actual position of the client upon request from the client with information obtained by determining the actual position of the client at the client's side.

7. The method as claimed in claim 1, 2 or 3, **characterized, by** updating said information specifying the actual position of the client prior to requesting transmission of position-related information from the service provider by client with information obtained by determining the actual position of the client at the client's side.

8. The method as claimed in any one of the preceding claims, **characterized, by** determining the actual position of the client by means of a dead reckoning or composite navigation module at the client's side.

9. The method as claimed in any one of the claims 1 to 8, **characterized, by** determining the actual position of the client by reading input information input by the client.

10. The method as claimed in any one of the claims 1 to 7, **characterized, by** determining the actual position of the client by means of a GPS (Global Positioning System) module at the client's side.
